Europäisches Patentamt

European Patent Office

Office européen des brevets

(19)

(11) **EP 1 155 345 B1**

(12) **FASCICULE DE BREVET EUROPEEN**

(45) Date de publication et mention
de la délivrance du brevet:
**25.05.2005 Bulletin 2005/21**

(21) Numéro de dépôt: **00990852.6**

(22) Date de dépôt: **29.12.2000**

(51) Int Cl.$^7$: **G02B 3/00**, B29D 11/00

(86) Numéro de dépôt international:
**PCT/FR2000/003743**

(87) Numéro de publication internationale:
**WO 2001/050159 (12.07.2001 Gazette 2001/28)**

(54) **PROCEDE DE FORMATION D'UN MICRORELIEF CONCAVE DANS UN SUBSTRAT, ET MISE EN OEUVRE DU PROCEDE POUR LA REALISATION DE COMPOSANTS OPTIQUES**

VERFAHREN ZUR AUSBILDUNG EINES KONKAVEN MIKRORELIEFS IN EINEM SUBSTRAT SOWIE ANWENDUNG DES VERFAHRENS ZUR HERSTELLUNG OPTISCHER KOMPONENTEN

METHOD FOR FORMING A CONCAVE MICRORELIEF IN A SUBSTRATE AND USE OF SAID METHOD FOR PRODUCING OPTICAL COMPONENTS

(84) Etats contractants désignés:
**DE GB IT**

(30) Priorité: **30.12.1999 FR 9916761**

(43) Date de publication de la demande:
**21.11.2001 Bulletin 2001/47**

(73) Titulaire: **COMMISSARIAT A L'ENERGIE ATOMIQUE**
**75752 Paris Cédex 16 (FR)**

(72) Inventeurs:
• **RABAROT, Marc**
**F-38120 Saint-Egreve (FR)**
• **MARTY, Jean**
**F-38180 Seyssins (FR)**

(74) Mandataire: **Weber, Etienne Nicolas et al**
**c/o Brevatome,**
**3, rue du Docteur Lancereaux**
**75008 Paris (FR)**

(56) Documents cités:
EP-A- 0 523 861     US-A- 4 776 868
US-A- 5 504 302     US-A- 5 871 653

• STERN M B ET AL: "DRY ETCHING - PATH TO COHERENT REFRACTIVE MICROLENS ARRAYS" PROCEEDINGS OF THE SPIE, 1993, pages 283-292, XP000893051 cité dans la demande
• GEX F ET AL: "PROGRAMMABLE MANUFACTURING TECHNIQUE OF LONG-FOCAL-LENGTH MICROLENS ARRAYS" PROCEEDINGS OF THE SPIE, vol. 2152, 22 janvier 1994 (1994-01-22), pages 253-260, XP000893050 cité dans la demande
• MACIOSSEK A ET AL: "Galvanoplating and sacrificial layers for surface micromachining" MICROELECTRONIC ENGINEERING,NL,ELSEVIER PUBLISHERS BV., AMSTERDAM, vol. 27, no. 1, 1 février 1995 (1995-02-01), pages 503-508, XP004025130 ISSN: 0167-9317
• WENGELINK J ET AL: "Semitransparent Mask Technique for Relief Type Surface Topographies" MICROELECTRONIC ENGINEERING,NL,ELSEVIER PUBLISHERS BV., AMSTERDAM, vol. 27, no. 1, 1 février 1995 (1995-02-01), pages 247-250, XP004025075 ISSN: 0167-9317

## Description

Domaine technique

La présente invention concerne un procédé de formation d'un microrelief concave dans un substrat et la mise en oeuvre de ce procédé pour la réalisation de différents types de composants ou de systèmes optiques.

L'invention trouve des applications dans le domaine de la micro-optique et plus particulièrement dans la fabrication de miroirs concaves, mais aussi de lentilles de type plan-concave, biconvexe ou biconcave. Ces composants peuvent se présenter sous une forme individuelle ou sous forme intégrée dans des systèmes optiques. Les microreliefs trouvent également leur utilité dans le domaine de la biotechnologie.

Il convient de préciser que les composants susceptibles d'être réalisés par le procédé de l'invention peuvent être aussi bien des composants classiques, cylindriques ou sphériques, avec un rayon de courbure déterminé et constant, que des composants asphériques, avec un rayon de courbure variable.

Une application particulière de l'invention est la réalisation d'une cavité et/ou d'un miroir de cavité concave pour un microlaser à cavité instable, ou encore la réalisation d'une microcuvette utilisable dans des équipements de biotechnologie.

Etat de la technique antérieure

Dans la cadre de la présente description, les termes convexe et concave sont utilisés pour qualifier le type de surface incurvée d'un composant optique, d'une couche de matière, ou d'un substrat. Ces termes s'entendent par rapport à la surface incurvée vue de l'extérieur dudit composant, de la couche ou du substrat.

On connaît à l'heure actuelle plusieurs techniques de fabrication de surfaces incurvées. Ces techniques ont été développées, en général, pour la fabrication de lentilles sphériques ou cylindriques.

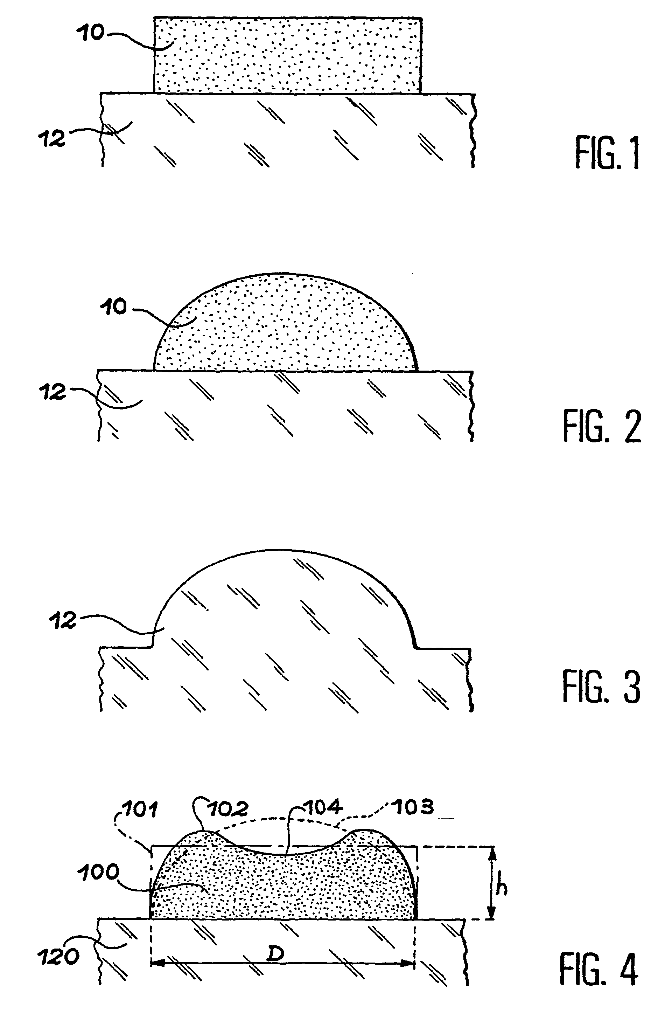

Les figures 1 à 3 annexées montrent de façon schématique les principales étapes d'un procédé destiné à conférer un relief convexe à la surface d'un substrat.

Une première étape illustrée par la figure 1 comporte la définition d'un bossage 10 de résine sur un substrat 12. Il s'agit en l'occurrence d'un disque. Le bossage 10 est formé, par exemple, par le dépôt d'une couche de résine photosensible et par un traitement de photolithographie pour éliminer la couche en dehors du bossage. Le bossage 10 est centré sur la partie du substrat dont la surface doit être incurvée.

Une deuxième étape, illustrée par la figure 2, comporte le chauffage du bossage de résine de façon à provoquer sa fusion. Lors de ce traitement thermique des tensions de surface font évoluer le bossage de résine vers une forme de goutte sphérique (convexe).

En poursuivant le traitement thermique, la résine subit une réticulation et se solidifie tout en conservant la forme sphérique.

Une troisième étape comprend le transfert dans le substrat de la forme de la goutte de résine. Ce transfert a lieu en soumettant le substrat et la résine à une gravure anisotrope verticale. Cette gravure permet d'éliminer une épaisseur de substrat qui est d'autant plus faible que l'épaisseur de résine est importante, en tout point de la surface du substrat. La résine est également éliminée au fur et à mesure de la gravure.

Après élimination complète de la résine, la gravure est arrêtée. On obtient ainsi un substrat 12, conforme à la figure 3, présentant une surface avec un relief convexe correspondant localement à la forme de la goutte de résine (qui a disparue).

La réalisation de reliefs concaves s'avère plus complexe et plus coûteuse. En effet, elle nécessite un nombre supplémentaire d'étapes de procédé.

Selon une première technique, il est possible d'utiliser un substrat conforme au substrat 12 de la figure 3 comme matrice d'emboutissage pour réaliser un relief concave, de forme complémentaire, dans un autre substrat.

En particulier, il est possible de mettre en oeuvre la technique d'emboutissage pour imprimer le relief complémentaire concave dans une couche de résine photosensible. Cette couche de résine peut ensuite être utilisée, pour un transfert par gravure de la forme concave dans un substrat, conformément à la troisième étape du procédé décrit précédemment.

Il va de soi que, dans ce cas, la résine n'est pas soumise à un traitement thermique de fusion, pour éviter de perdre le relief formé par emboutissage.

A titre d'illustration de cette technique, on peut se reporter aux documents (1) et (2) dont les références sont précisées à la fin de la présente description.

Afin d'éviter la réalisation préalable d'une matrice d'emboutissage, et les coûts qu'elle engendre, d'autres techniques de réalisation de reliefs concaves ont été développées.

Ces techniques font également appel à une couche de résine, et plus précisément une couche de résine photosensible susceptible d'être mise en forme selon des procédés de photolithographie. Pour conférer à la résine un relief concave, celle-ci est soumise à une insolation dont on contrôle localement l'intensité.

Le contrôle de l'intensité d'insolation peut avoir lieu, comme le montre le document (3), au moyen d'un masque de lithographie. Le masque permet d'obtenir différents "niveaux de gris" et ainsi moduler la profondeur de résine insolée.

Cette technique est avantageuse dans la mesure où elle permet en un seul cycle d'insolation de développer et de structurer une couche de résine selon un relief déterminé. Cependant, les machines de lithographie en projection sont coûteuses. La mise au point et l'utilisation des machines pour le procédé ci-dessus sont également des opérations longues et complexes.

Le contrôle de l'insolation peut aussi être effectué par la commande d'un faisceau laser ou d'un faisceau d'électrons utilisés comme source d'insolation.

Selon une première possibilité, on peut moduler la puissance de la source en correspondance avec la région de la couche de résine insolée.

Selon une autre possibilité, on peut aussi maintenir constante la puissance de la source lors d'un balayage de la couche de résine. Dans ce cas, le contrôle de l'insolation a lieu en ajustant la vitesse et les directions du déplacement relatif entre la source d'insolation et la couche de résine.

Ces techniques font appel à des bancs de traitement optomécanique également complexes et coûteux. Elles font de plus apparaître des difficultés liées à la réalisation de jointures au centre de motifs à symétrie de révolution. Ces difficultés peuvent nuire à la qualité des reliefs obtenus et donc rendre la technique inadaptée à la fabrication de certains composants optiques.

Une illustration des techniques impliquant un contrôle de la source d'insolation est donnée, par exemple, dans les documents (4) et (5). Les références de ces documents, de même que celles des autres documents cités, sont indiquées à la fin de la description.

Le balayage de la couche de résine au moyen d'un faisceau d'insolation peut être combiné, comme le montre le document (6), à l'utilisation d'un masque. La technique décrite par ce document s'apparente donc à celles exposées précédemment et présente sensiblement les mêmes inconvénients.

Le document (7) se rapporte à une méthode de réalisation de reliefs concaves qui ne met pas en oeuvre de couche intermédiaire de résine photosensible destinée à définir la forme des reliefs.

Le substrat dans lequel on souhaite pratiquer le relief est gravé directement par un procédé de gravure ionique réactive. L'anisotropie de gravure est contrôlée en ajustant les dimensions d'un masque de gravure ainsi que les paramètres de la gravure réactive.

Cette technique, a priori avantageuse, présente un champ d'application limité aux matériaux susceptibles d'être gravés par un plasma réactif. En outre, elle ne permet pas d'obtenir une bonne qualité de surface optique, avec une large gamme de rayons de courbure, ni un bon rendement de fabrication.

Un meilleur rendement de fabrication peut être obtenu par un traitement collectif de préformes de composants optiques. Selon cette méthode les préformes sont noyées dans un matériau d'enrobage puis abrasées et polies avec le matériau d'enrobage. Une surface convexe ou concave des composants peut être obtenue en choisissant un matériau d'enrobage avec une résistance à l'abrasion inférieure, respectivement supérieure à celle du matériau des préformes.

Ce traitement par abrasion peut être appliqué par exemple à la fabrication de cavités de microlasers de type plan convexe.

Ces cavités, encore appelées cavités instables, permettent d'augmenter la taille du faisceau et donc la puissance de sortie des microlasers qui en sont équipés. Le rayon de courbure, concave, de la surface des microcavités, est compris dans une gamme de quelques millimètres à quelques centaines de millimètres pour des diamètres de quelques dizaines, de micromètres à quelques centaines de micromètres.

A titre d'illustration, on peut se reporter aux documents (8) et (9).

Comme indiqué ci-dessus, la technique de formation de reliefs concaves (ou convexes) par abrasion est adaptée à la fabrication collective et économique de composants optiques tels que les cavités de microlasers. Elle ne permet toutefois pas toujours d'obtenir une valeur souhaitée du rayon de courbure ni une très bonne qualité optique.

En outre, le procédé décrit implique de nombreuses étapes préliminaires de préparation qui ne peuvent pas être toutes réalisées de façon collective.

Le document EP-A-523 861 divulgue une méthode de production d'un relief convexe dans un substrat à partir du chauffage d'un boisage et d'une gravure.

Exposé de l'invention

L'invention a pour but de proposer un procédé qui permette la formation d'un relief concave dans un substrat susceptible d'être mis en oeuvre pour la réalisation de composants optiques ou de systèmes optiques, et qui ne présente pas les difficultés ou limitations des techniques évoquées ci-dessus.

Un but est en particulier de proposer un tel procédé qui soit économique et adapté à un traitement de fabrication collectif d'un grand nombre de composants.

Un autre but est de proposer un tel procédé dont la mise en oeuvre comprend un nombre réduit d'étapes opératoires et qui permet un contrôle précis des rayons de courbure des reliefs réalisés.

Encore un autre but est de proposer un tel procédé qui permet la réalisation de couches optiques ou de composants avec un état de surface de bonne qualité optique et qui puisse être mis en oeuvre pour la réalisation de reliefs sphériques ou asphériques.

L'invention a également pour but de proposer des procédés de réalisation de lentilles de type plan concave, biconcave ou biconvexe, ainsi que des systèmes optiques incluant une ou plusieurs de ces lentilles.

Pour atteindre ces buts, l'invention a plus précisément pour objet un procédé de formation d'au moins un relief concave dans un substrat, comprenant les étapes suivantes récités dans la revendication 1, les revendications dépendantes définissant des modes de réalisation additionnels.:

- la formation d'au moins un bossage de matériau fluable sur le substrat, le bossage de matériau fluable présentant un facteur de forme défini par le rapport d'une hauteur moyenne h du bossage sur une des dimensions d'une surface s de contact du bossage avec le substrat,

- le chauffage du matériau fluable à une température suffisante pour provoquer un fluage dudit matériau, et
- la gravure du substrat et du matériau flué pour imprimer au substrat un relief.

A titre d'exemple, la dimension de la surface s prise en considération est généralement la plus grande ou le diamètre dans le cas d'une surface s à symétrie de révolution.

Le matériau fluable peut avantageusement être une résine photosensible ou encore un matériau fusible tel qu'un alliage métallique à bas point de fusion.

Conformément à l'invention, on ajuste au moins l'un des paramètres choisis parmi le facteur de forme et la température de chauffage pour conférer au bossage un relief concave et on provoque une solidification du matériau flué dans un état où celui-ci présente ledit relief concave. Dans le cas d'une résine, cette solidification correspond à une réticulation.

Dans le texte qui suit, on décrit la fabrication d'un seul relief, à partir d'un seul bossage. L'invention peut cependant être mise en oeuvre en formant sur un ou plusieurs substrats, un ou plusieurs bossages, et en procédant ensuite au traitement collectif des substrats et/ou des bossages.

L'invention repose sur une propriété des matériaux fluables tels que les résines, selon laquelle lors du fluage, ceux-ci ne prennent pas immédiatement une forme sphérique, qui est une forme finale stable, mais évoluent vers cette forme en passant par des formes intermédiaires qui présentent des parties concaves.

L'évolution du bossage du matériau fluable vers la forme sphérique finale est plus rapide lorsque la quantité de matière qui forme le bossage est plus importante et lorsque la température de chauffage est plus élevée.

Les inventeurs ont par ailleurs observé que, lorsque la hauteur de matériau du bossage est faible par rapport à la dimension considérée de sa surface, c'est-à-dire lorsqu'un facteur de forme du bossage est inférieur à une certaine valeur de seuil, le bossage ne peut pas évoluer jusqu'à la forme finale sphérique, mais se stabilise en une forme (intermédiaire) qui présente une région concave.

Cette particularité peut être mise à profit dans une première possibilité de mise en oeuvre de l'invention. En effet, on peut former un bossage avec un facteur de forme inférieur à une valeur de seuil à partir de laquelle un fluage vers une forme convexe stable serait possible. Le traitement thermique de fluage est suivi par la solidification du matériau flué.

Cette solidification peut être, par exemple, obtenue par trempe dans le cas d'un matériau fusible, ou par chauffage dans le cas d'une résine (le chauffage permettant sa réticulation).

La solidification du matériau flué permet de consolider ce dernier et ainsi fixer la forme concave obtenue, pour éviter qu'il ne soit affecté par une manipulation ultérieure du substrat.

En considérant que le bossage de matériau fluable, par exemple cylindrique ou en forme de disque, présente une surface de contact sensiblement circulaire avec le substrat, le facteur de forme peut également être défini par la hauteur h et le diamètre D, par exemple comme le rapport h/D.

Dans ce cas, pour permettre une stabilisation du bossage en sa forme concave, le facteur de forme h/D est choisi de préférence inférieur à une valeur de seuil telle que :

$$h/D < 0,015.$$

Il convient de préciser que la valeur de seuil indiquée ci-dessus correspond à des résines que l'on utilise usuellement dans les techniques connues de photolithographie et qui sont parfaitement utilisables dans le cadre de l'invention.

Selon une autre possibilité de mise en oeuvre de l'invention dans le cas de l'utilisation d'un bossage en résine, on peut aussi former le bossage avec un facteur de forme supérieur ou égal à la valeur de seuil à partir de laquelle un fluage vers une forme convexe stable serait possible. Dans ce cas, on effectue le chauffage avec une température suffisante pour provoquer une réticulation de la résine avant l'obtention de la forme convexe stable.

Ici, la réticulation correspond à la solidification et a essentiellement pour rôle de figer l'évolution de la forme de la résine lors du fluage.

Le rayon de courbure de la forme concave obtenue peut être ajusté en retardant ou anticipant légèrement le moment de la réticulation. Ceci peut avoir lieu en contrôlant la température de chauffage. Le chauffage, pour les résines usuelles, peut être effectué généralement à une température supérieure à 120°C.

Après le fluage du bossage, la gravure du substrat et du matériau flué permet de conférer au substrat une forme (concave) fonction de la forme (concave) du matériau flué. On dit également que la forme du matériau flué est "transférée" dans le substrat.

La gravure du substrat et du matériau flué peut être caractérisée par sa sélectivité. Celle-ci est définie comme le rapport entre une vitesse de gravure du matériau constituant le substrat, notée $V_s$, et une vitesse de gravure du matériau flué, notée $V_r$. Les vitesses $V_s$ et $V_r$ sont dictées par les matériaux, mais également par les agents de gravure mis en oeuvre. En désignant par S la sélectivité, on a :

$$S = \frac{V_s}{V_r}.$$

La sélectivité de la gravure induit une modification du rayon de courbure entre le rayon de courbure de la forme concave du matériau flué et le rayon de courbure de la forme transférée dans le substrat.

En considérant que la forme concave du matériau flué et la forme concave transférée dans le substrat sont sensiblement sphériques, et en désignant respectivement par $R_r$ et $R_s$ leurs rayons de courbure, la relation suivante est vérifiée :

$$\frac{R_r}{R_s} = \frac{V_s}{V_r} = S .$$

Il en résulte que le rayon de courbure $R_s$ qui est conféré au substrat peut être librement ajusté soit en modifiant le rayon de courbure du matériau flué, soit surtout en modifiant la sélectivité de la gravure.

La sélectivité de la gravure peut être maintenue constante pendant toute l'étape de gravure. Dans ce cas, le caractère sphérique de la forme du matériau flué est conservé lors du transfert.

Il est en revanche possible également de varier, de façon continue ou non, la sélectivité de gravure. Ceci peut avoir lieu en agissant, par exemple, sur la composition des agents de gravure mis en oeuvre. A titre d'illustration, pour une gravure plasma, on peut régler la concentration ou le débit respectif des gaz réactifs utilisés ($CHF_3/O_2$ ; $SF_6/O_2$). La variation de la sélectivité permet de transférer dans le substrat une forme asphérique à partir d'une forme sensiblement sphérique du matériau flué.

Selon un autre aspect de l'invention, il est possible d'interrompre la gravure avant ou après la disparition complète du matériau flué.

Lorsque la gravure est interrompue avant la disparition complète du matériau flué, le reliquat de matériau flué peut être éliminé, par exemple dissout, pour laisser subsister autour de la forme transférée une portion de substrat dans sa forme initiale. En particulier, lorsque la surface du substrat est initialement plane, ce procédé permet d'entourer la forme concave d'un méplat.

Le procédé évoqué ci-dessus peut être mis à profit pour la réalisation de différents types de composants optiques, tels qu'en particulier des miroirs concaves, par exemple, pour des cavités laser ou des lentilles ou des reliefs plan-concave, des lentilles plan-convexe, ou des lentilles biconcaves ou biconvexes. Des systèmes plus complexes peuvent également être réalisés.

Les miroirs peuvent être obtenus facilement, par exemple, en métallisant le relief concave pratiqué dans un substrat, conformément à l'invention.

Pour réaliser un ou plusieurs reliefs plan-concave on peut former un ou plusieurs bossages sur l'une des faces principales d'un substrat à faces parallèles. On met en oeuvre ensuite les étapes du procédé décrit. Le substrat est alors de préférence en un matériau dont l'indice de réfraction et la transparence sont adaptés à la réalisation d'une lentille ou d'un autre composant optique tel qu'une cavité laser.

La fabrication d'une lentille de type plan-convexe peut comporter les étapes suivantes :

a) la formation d'un relief concave dans un substrat conformément au procédé décrit précédemment,
b) le dépôt conforme sur le substrat d'une couche de matériau optique épousant la forme du relief,
c) aplanissement d'une face libre de ladite couche pour la rendre sensiblement plane.

On entend par matériau optique, un matériau adapté à la réalisation d'une lentille ou d'un composant optique, c'est-à-dire un matériau présentant un indice et une transparence souhaités pour l'application envisagée.

Le procédé de fabrication d'une lentille plan-convexe peut de façon optionnelle, comporter, en outre, avant l'étape b), le dépôt d'une couche de matériau sacrificiel sur le substrat, et l'élimination de la couche de matériau sacrificiel postérieurement à l'une des étapes b) ou c) pour libérer la couche de matériau optique.

La fabrication d'une lentille biconcave peut comporter les étapes suivantes :

a) la formation d'un bossage de matériau fluable sur un substrat,
b) le fluage dudit matériau jusqu'à l'obtention d'un état de fluage stable dans lequel le matériau flué présente une forme convexe,
c) la gravure du substrat et du matériau flué pour imprimer au substrat un relief convexe,
d) le dépôt sur le substrat d'une couche de matériau optique épousant le relief convexe du substrat,
e) l'aplanissement d'une face libre de la couche de matériau optique,
f) la formation d'un relief concave dans la couche de matériau optique, conformément au procédé de l'invention décrit précédemment, le relief concave étant formé dans une région concave de la couche de matériau optique correspondant au relief convexe du substrat.

Selon une mise en oeuvre particulière du procédé de fabrication de la lentille, celui-ci peut comprendre, postérieurement à l'étape f) le dépôt d'une sur-couche sur la couche de matériau optique, et la planarisation de ladite sur-couche.

De même que pour la fabrication d'une lentille plan-concave, il est possible de prévoir le détachement de la lentille du substrat.

Dans ce cas, avant l'étape d) le dépôt d'une couche de matériau sacrificiel, et après l'étape f), l'élimination de la couche de matériau sacrificiel pour libérer la couche de matériau optique.

On peut noter que dans ce procédé, le type de matériau utilisé pour le substrat peut être choisi librement sans tenir compte des exigences optiques telles que l'indice ou la transparence.

La fabrication d'une lentille biconvexe peut comporter les étapes suivantes :

a) la formation d'un relief concave dans un substrat selon le procédé de l'invention décrit précédemment,
b) le dépôt sur le substrat d'une couche de matériau optique épousant ledit relief concave,
c) formation d'un bossage de matériau fluable sur la couche de matériau optique faisant sensiblement face audit relief concave,
d) le fluage du bossage jusqu'à l'obtention d'un état de fluage stable dans lequel le matériau flué présente une forme convexe,
e) la gravure du matériau flué et de la couche de matériau optique pour imprimer dans la couche de matériau optique la forme convexe.

Pour permettre la libération de la lentille, le procédé peut également comporter, avant l'étape b), la formation d'une couche de matériau sacrificiel sur le substrat et l'élimination de cette couche après l'étape e), pour libérer la couche optique.

D'autres caractéristiques et avantages de l'invention ressortiront mieux de la description qui va suivre, en référence aux figures des dessins annexés. Cette description est donnée à titre purement illustratif et non limitatif.

Pour simplifier la description qui suit, celle-ci se réfère à des exemples dans lesquels une résine est utilisée comme matériau fluable.

Brève description des figures

- Les figures 1 à 3 sont des coupes schématiques d'un substrat illustrant des étapes successives d'un procédé connu de formation dans le substrat d'un relief convexe.
- La figure 4 est une coupe schématique d'un bossage de résine illustrant l'évolution du bossage sous l'effet d'un traitement thermique de fluage.
- Les figures 5, 6 et 7 sont des coupes schématiques d'un substrat illustrant des étapes successives d'un procédé de formation d'un relief concave, conforme à l'invention.
- Les figures 8 et 9 illustrent des étapes de procédé constituant une variante par rapport à la figure 7.
- Les figures 10 à 13 sont des coupes schématiques illustrant des étapes successives de fabrication d'une lentille de type plan-convexe.
- La figure 14 est une coupe schématique d'une structure obtenue conformément au procédé des figures 10 à 13 et illustre la fabrication d'un système optique comprenant une lentille de type plan convexe, conforme à l'invention.
- Les figures 15 à 21 sont des coupes schématique d'une structure illustrant des étapes successives de fabrication d'une lentille biconcave selon un procédé conforme à l'invention.
- Les figures 22 et 23 sont des coupes schématiques d'une structure illustrant la fabrication d'un système optique incluant une lentille biconcave telle qu'obtenue par le procédé des figures 15 à 20.
- Les figures 24 à 30 sont des coupes schématiques d'une structure illustrant des étapes successives de fabrication d'une lentille biconvexe selon un procédé conforme à l'invention.
- Les figures 31 et 32 sont des coupes schématiques d'une structure illustrant la fabrication d'un système optique incluant une lentille biconvexe telle qu'obtenue par le procédé des figures 24 à 29.
- Les figures 33 et 34 montrent différentes formes de substrat que l'on peut obtenir par un traitement "double-face" conforme à l'invention.

Description détaillée de modes de mise en oeuvre de l'invention

La figure 4 montre de façon schématique, et en coupe, l'évolution de la forme d'un bossage 100 de résine porté par un support 120, lors d'un traitement thermique effectué à une température suffisante pour provoquer un fluage de la résine.

Le bossage 100 de la figure 4 se présente initialement sous la forme d'un disque de diamètre D et de hauteur h. Le profil en coupe de ce disque est indiqué avec la référence 101. Les paramètres D et h sont tels que la résine peut, sous l'effet d'un traitement thermique approprié et de la libération de tensions superficielles qu'il engendre, évoluer jusqu'à une forme finale de calotte sphérique indiquée avec la référence 103. Cette forme sphérique est stable. Elle n'évolue pas en prolongeant le traitement thermique.

Dans son évolution vers la forme stable, la résine passe par des formes intermédiaires 102 qui présentent localement un relief concave 104.

Or, comme indiqué précédemment, les inventeurs ont mis en évidence l'intérêt de stabiliser la résine dans une forme intermédiaire 102 présentant un relief concave 104 en provoquant une réticulation de la résine avant d'atteindre la forme stable 103. La réticulation peut être provoquée, notamment, en augmentant la température du traitement thermique. (La température de traitement T est par exemple telle que $120°C \ll T < 200°C$, de préférence $T \sim 185°C$).

La forme concave peut aussi être obtenue en diminuant le facteur de forme du bossage jusqu'à rendre impossible l'évolution complète vers la forme sphérique stable 103.

Dans la description qui suit, plusieurs exemples de mise en oeuvre de l'invention, mettant à profit le relief concave de la forme intermédiaire (figée) du bossage de résine sont exposés.

Dans chacun des exemples on décrit la réalisation d'un seul composant optique dans une couche de matériau. Il convient cependant de noter que les différents procédés exposés peuvent être mis en oeuvre de façon concomitante et qu'une pluralité de composants, identiques ou différents, peuvent être réalisés en même temps sur un même substrat.

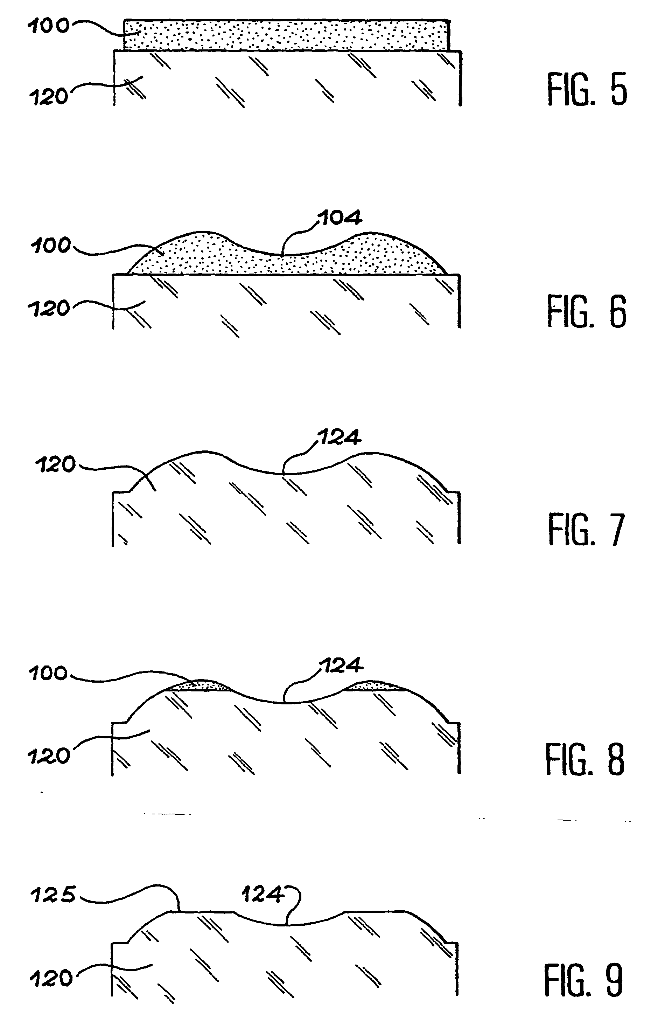

Un premier exemple de mise en oeuvre de l'invention correspond aux figures 5 à 7 qui montrent la formation d'une lentille de type plan-concave, c'est-à-dire une lentille avec une première face principale plane et une deuxième face principale présentant un relief localement concave.

La figure 5 montre l'enduction d'un substrat 120 à faces planes et parallèles d'une couche de résine 100. Le substrat 120 est par exemple un substrat en verre ou en un autre matériau optique approprié. La résine est soumise à un traitement de photolithographie de façon à définir un bossage, également repéré avec la référence 100, qui se présente sous la forme, par exemple, d'un disque. le bossage, selon les applications envisagées peut aussi prendre une forme de parallélépipède ou une autre forme quelconque.

La figure 6 montre une étape de recuit de fusion lors de laquelle la résine 100 est chauffée à une température suffisante pour provoquer son fluage et pour provoquer sa réticulation dans une forme présentant une partie avec un relief concave 104.

Après la réticulation, l'ensemble de la résine et du substrat sont soumis à une gravure, de préférence une gravure anisotrope verticale, c'est-à-dire sensiblement perpendiculaire aux faces principales du substrat 120. La gravure est, par exemple, une gravure ionique réactive (RIE) qui attaque la résine et le substrat.

Les régions du substrat 120 recouvertes par une épaisseur plus ou moins importante de résine sont plus ou moins (longtemps) soumis à la gravure, de sorte que le motif concave de la résine se trouve reproduit dans la matière du substrat. Comme indiqué précédemment, le rayon de courbure, ou de façon plus générale l'accentuation du relief concave dans le substrat, dépendent essentiellement de la sélectivité de la gravure.

La figure 7 montre la forme du substrat 120 lorsque la gravure est poursuivie jusqu'à disparition complète de la résine, c'est-à-dire jusqu'à transfert complet du relief dans le substrat. La partie concave du substrat est repérée par la référence 124.

Il est possible, comme le montre la figure 8, d'interrompre la gravure avant la disparition complète de la résine de sorte qu'un reliquat de résine 100 demeure en bordure de la partie concave 124.

Le reliquat de résine peut être éliminé sans attaquer le substrat de façon à préserver la forme de ce dernier. L'élimination du reliquat de résine peut avoir lieu, par exemple, par une attaque chimique à l'aide des solvants de la résine ou au moyen d'un acide sélectif entre cette résine et le substrat ou encore par un plasma réactif. Il en résulte, comme le montre la figure 9, un méplat 125 en bordure de la partie concave. Le méplat correspond, en fait, à une partie de la surface initiale du substrat qui a été préservée lors de l'étape de gravure.

Le substrat tel que représenté aux figures 7 et 9 peut être utilisé tel quel comme composant optique s'il est en un matériau approprié. Il peut également être métallisé pour former un miroir concave ou être recouvert d'un diélectrique multicouche.

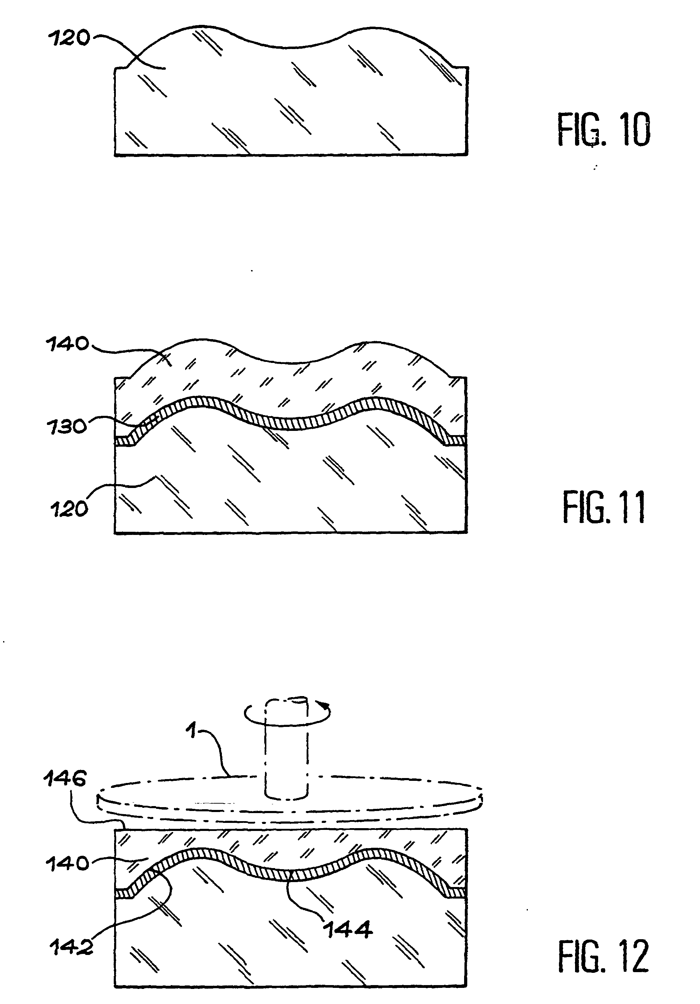

On décrit à présent, en référence aux figures 10 à 14, la réalisation d'une microlentille de type plan-convexe.

Une première étape, illustrée par la figure 10 comprend la réalisation d'un substrat 120 avec un relief de type concave. Ce substrat est obtenu au terme d'un procédé tel que décrit ci-dessus. On considère que le substrat 120 est en un matériau ayant un indice optique noté n1.

La figure 11 montre le dépôt successif sur la surface du substrat 120 d'une couche de matériau sacrificiel 130 et d'une couche optique 140 qui épousent le relief (concave) du substrat.

La couche de matériau sacrificiel 130 est par exemple une couche de polymère ou une couche métallique susceptible d'être éliminée sélectivement sans altérer les autres couches de la structure. Le rôle de la couche de matériau sacrificiel est indiqué plus loin. On peut noter cependant que la couche de matériau sacrificiel peut, dans certaines réalisations, être omise.

La couche optique 140 présente un indice optique n2 qui peut être différent de l'indice optique n1 du substrat.

La figure 12 montre une étape de planarisation de la couche optique 140, par polissage. Un outil de polissage 1 est représenté schématiquement.

La couche optique présente une face inférieure 142 en contact avec le substrat 120, par l'intermédiaire (éventuellement) de la couche sacrificielle. La face inférieure présente une région convexe 144 qui épouse le relief concave du substrat. La couche optique présente également, après le polissage, une face supérieure libre 146, sensiblement plane.

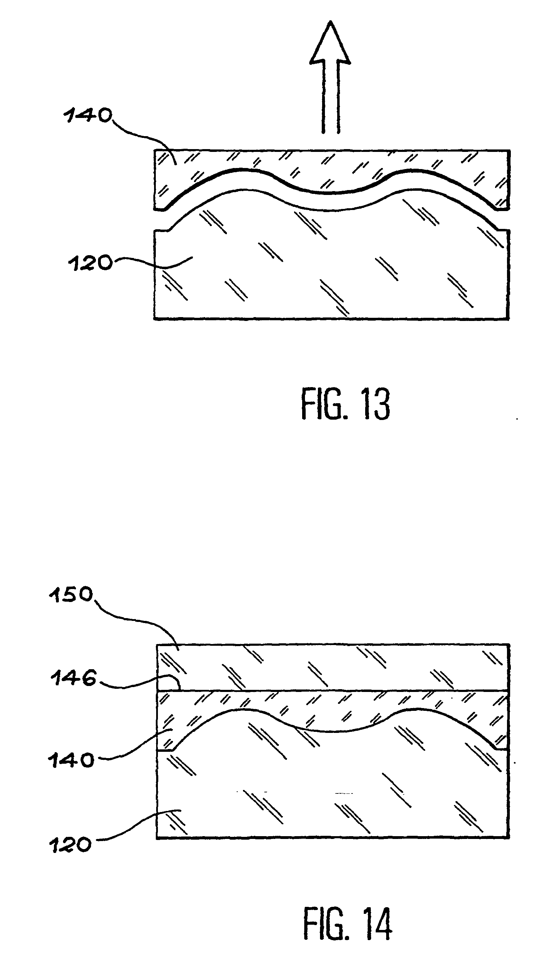

Comme le montre la figure 13, après le polissage, la couche optique 140 peut être détachée du substrat 120 par élimination de la couche sacrificielle. Elle est alors autonome et comporte (localement) une lentille de type plan-convexe. Plusieurs lentilles peuvent de la même façon être formées dans une même couche optique.

A titre de variante, la couche optique 140 peut aussi être conservée en contact du substrat 120, comme le montre la figure 14. Dans ce cas, la couche sacrificielle peut être omise.

Une sur-couche 150 présentant par exemple un indice optique n1 identique à (ou différent de) celui du substrat 120 et différent de celui de la couche optique, peut alors être formée sur la face libre 146 de la couche optique 140.

La sur-couche 150 peut dans des étapes de procédé ultérieures être utilisée comme un nouveau substrat pour le transfert de reliefs.

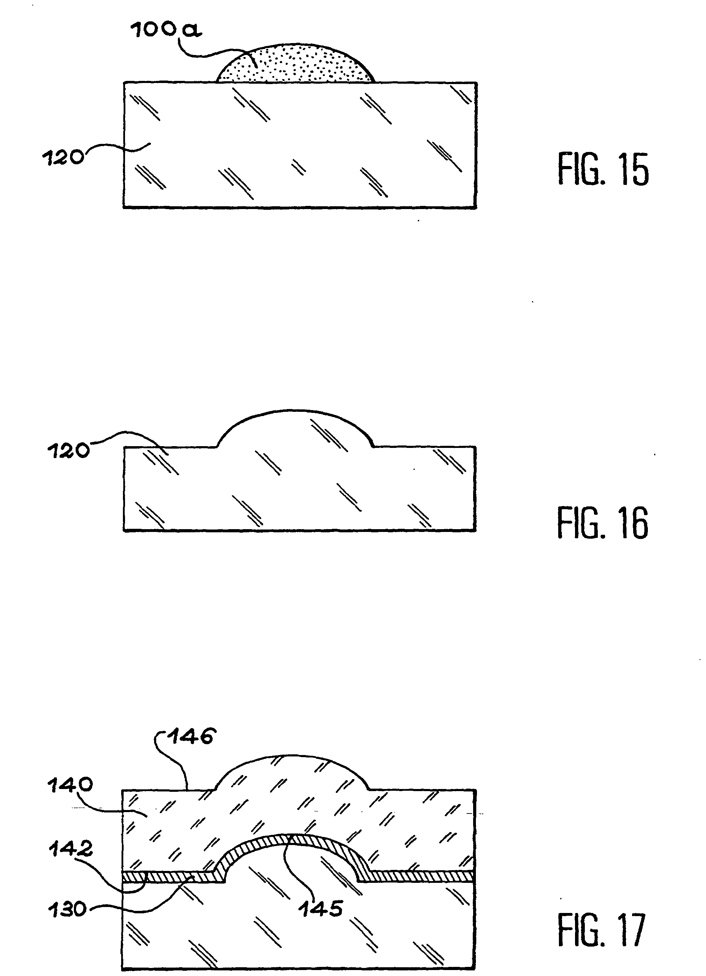

On décrit à présent en référence aux figures 15 à 21 la réalisation d'une microlentille biconcave.

La figure 15 montre la formation d'un bossage de résine 100a de forme sphérique convexe sur un substrat 120.

Le bossage sphérique est réalisé en prolongeant le fluage de la résine jusqu'à l'obtention de la forme sphérique stable avant la réticulation de la résine.

Une gravure permet de transférer, comme le montre la figure 16, la forme sphérique convexe dans le substrat 120. On peut se reporter à ce sujet aux figures 1 à 3 déjà décrites.

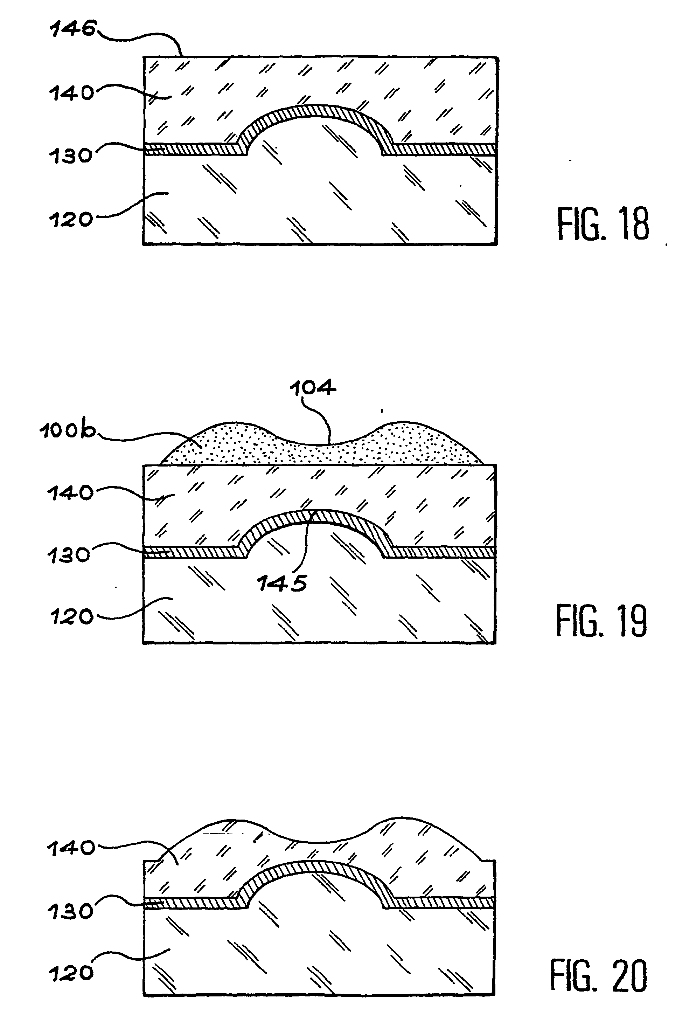

La figure 17 montre la formation successive d'une couche de matériau sacrificielle 130 optionnelle et d'une couche optique 140 sur le substrat 120. Les couches sacrificielle et optique épousent la forme convexe du substrat, de sorte que la couche optique 140 présente une face inférieure 142, avec une région concave 145. La face inférieure est en contact avec le substrat de façon directe ou par l'intermédiaire de la couche sacrificielle 130.

La face supérieure 146, libre, de la couche optique 140 présente un relief qui reproduit le relief convexe du substrat.

La figure 18 montre la structure de la figure 17 obtenue après planarisation de la face supérieure 146 de la couche optique 140.

Une étape suivante du procédé, illustrée par la figure 19, comprend le dépôt sur la face supérieure 146 plane d'un bossage de résine 100b et le traitement de cette résine pour lui conférer un relief avec une partie concave 104.

Le bossage est centré par rapport à l'emplacement de la région concave 144 de la couche optique de telle façon qu'après le traitement la partie concave 104 de la résine coïncide avec la partie concave 144 de la couche optique.

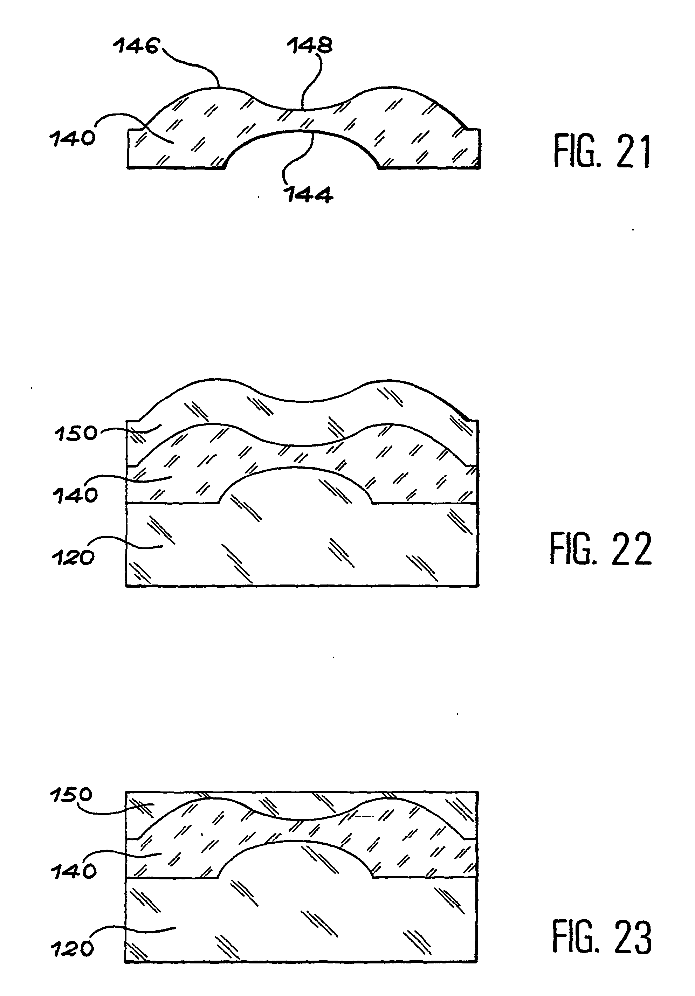

Le relief concave de la résine est transféré par gravure dans la couche optique de la façon déjà décrite préalablement. On obtient ainsi la structure représentée à la figure 20.

La figure 21 montre la couche optique 140 séparée du substrat par élimination de la couche sacrificielle 130. On observe que la couche présente en sa face "supérieure" 146 une partie concave 148 qui coïncide avec la partie concave 145 de la face inférieure. La couche 140 comprend ainsi une partie qui forme une lentille biconcave.

Les figures 22 et 23 montrent une structure dans laquelle la couche optique 140 reste solidaire du substrat et dans laquelle elle est recouverte d'une sur-couche 150.

La structure des figures 22 et 23 ne comprend pas de couche sacrificielle.

La sur-couche 150 est en un matériau présentant, par exemple, un indice n1 différent de l'indice n2 de la couche optique 140, et égal ou différent à celui du substrat 120.

La sur-couche 150 peut, comme le montre la figure 23, être planarisée. Cette opération permet d'obtenir une structure à faces planes parallèles utilisant les dioptres formés par la couche optique 140 avec le substrat 120 et la sur-couche 150 respectivement. Cette structure peut de plus être empilée par la suite avec d'autres éléments optiques.

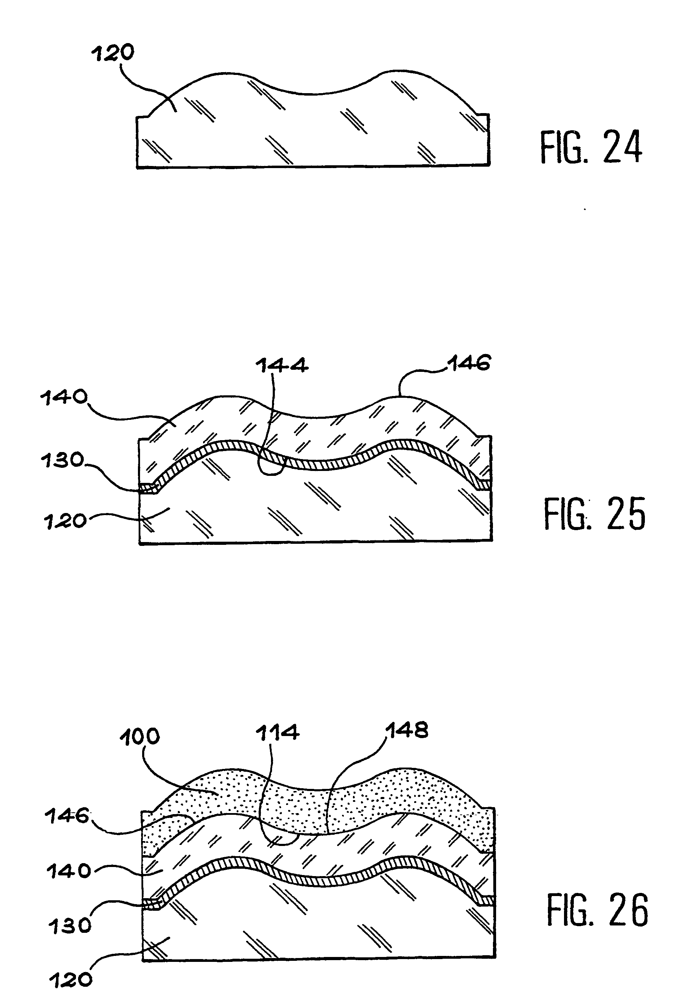

Les figures 24 à 30 décrites ci-après, illustrent la réalisation d'une lentille biconvexe.

Les figures 24 et 25 montrent la fabrication d'une structure comprenant dans l'ordre un substrat 120, avec une surface supérieure présentant une partie concave, une couche sacrificielle 130 et une couche optique 140. La couche sacrificielle et la couche optique épousent le relief de la face supérieure du substrat, dont elles sont solidaires. La couche optique présente ainsi sur sa face tournée vers le substrat, une région convexe 144.

Les figures 24 et 25 correspondent à des étapes opératoires identiques à celles illustrées par les figures 10 et 11. On peut donc, à ce sujet, se reporter à la description qui précède.

Sur la couche optique 140 qui présente une face supérieure 146 avec une région concave 148, on forme une couche de résine 100. Cette opération est illustrée par la figure 26. La résine présente ainsi une face inférieure en contact avec la couche optique, qui présente une région convexe 114. La région 114 convexe de la résine correspond à la région concave 148 de la face supérieure 140 de la couche optique 140.

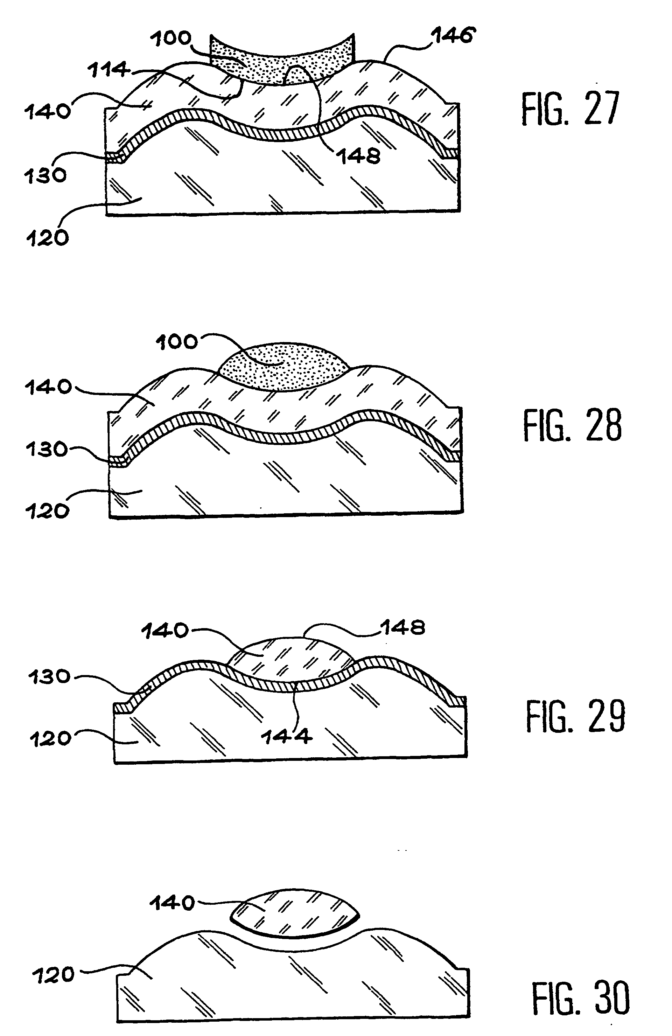

La figure 27 montre une opération de mise en forme de la résine, au terme de laquelle on ne conserve qu'une partie de la couche correspondant pour l'essentiel à la région convexe 114.

La résine 100 est ensuite soumise à un traitement thermique pour provoquer son fluage jusqu'à obtenir une surface libre convexe.

Cette opération est illustrée par la figure 28.

La structure est ensuite soumise à une gravure anisotrope pour transférer la forme de la résine dans la couche optique 114. Cette opération est poursuivie comme le montre la figure 29, jusqu'à éliminer entièrement la partie de la couche optique non recouverte par la résine.

La couche optique 140 restante se présente alors sous la forme d'une lentille biconvexe avec des parties supérieure et inférieure 144, 148 convexes.

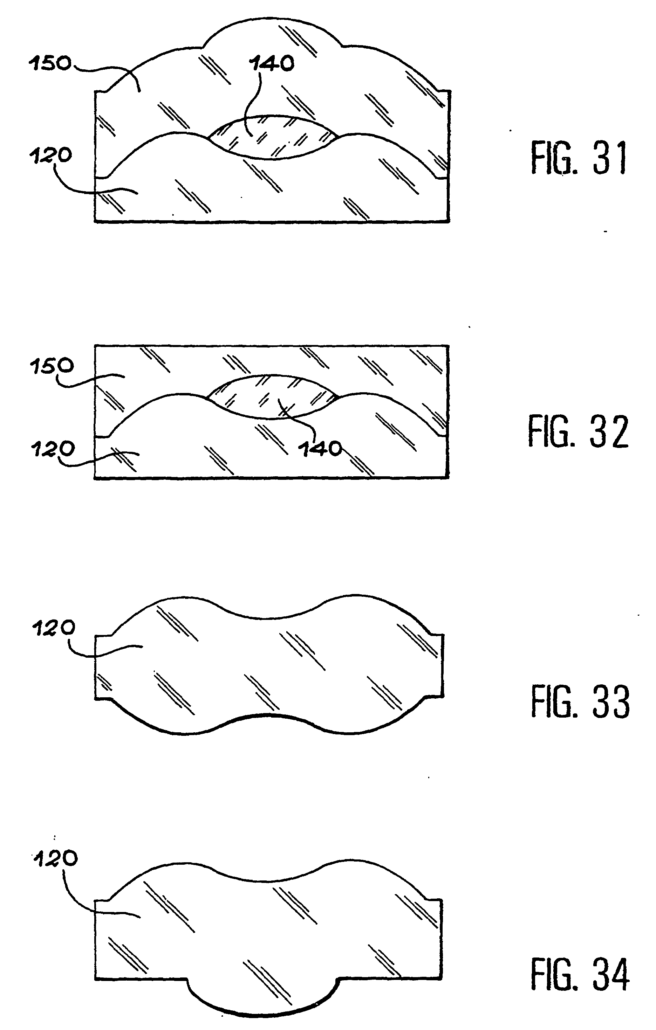

La figure 30 montre la lentille formée par la couche 140, séparée du substrat 120 après élimination de la couche sacrificielle.

La figure 31 montre une structure résultant d'un procédé qui constitue une variante du procédé décrit ci-dessus. En l'absence de couche sacrificielle, la lentille, formée dans la couche optique 140 reste solidaire du substrat. Elle est par ailleurs recouverte d'une sur-couche 150 en un matériau d'indice n1 différent de l'indice n2 de la couche optique et égal à (ou différent de) l'indice n1 du substrat pour adapter les propriétés du composant optique ainsi obtenu, à l'application visée.

Comme le montre la figure 32, la sur-couche 150 peut être planarisée.

Dans les procédés de la description qui précède, seule l'une des faces d'un substrat ou d'une couche de matériau ont été soumises à une gravure pour y transférer un relief à partir d'une couche de résine. Cette technique peut cependant être appliquée aux deux faces d'un substrat.

La figure 33 montre un substrat 120 dont les deux faces principales opposées ont été gravées pour y pratiquer des reliefs avec respectivement des parties concaves qui coïncident.

La figure 34 montre un substrat 120 dont l'une des faces principales a été gravée pour y pratiquer un relief avec une partie concave et dont l'autre face a été gravée pour y pratiquer un relief convexe qui coïncide avec la partie concave.

## DOCUMENTS CITES

### (1)

"Consistently reproducible lenses offer cost. Size and weight advantages for visible through infrared light".
Replicated Optics Cover the Spectrum, February 1994, pages 95-97, Photonics spectra. de HAN W. SAFT

### (2)

"ORMOCER®s, inorganic-organic polymer materials for applications in micro systems technology"
MICROSYSTEM TECHNOLOGIES'94, 4th International Conference on Micro Electro, Opto, Mechanical Systems and Components, Berlin October 19-21, 1994 de Dr. M. Popall, Dr. J. kappel, Dr, J. Schluz et Dr. H. Wolter

### (3)

"Fabrication of Relief - Topographic Surfaces with a One-Step UV - Lithographic Process"
Proceeding : Microsystem technologies'94 Berlin, 19-21 Octobre 1994, pages 163-172
de H.J. QUENZER, W. HENKE, W. HOPPE, W. PILZ, B. WAGNER

### (4)

"Continuous-relief microoptical elements fabricated by laser beam writing"
Proceeding : Microsystem technologies'94 Berlin, 19-21 Octobre 1994, pages 219-228
de Georges PRZYREMBEL

### (5)

"Generation of Relief-Type Surface Topographies for Integrated Microoptical Elements"
Proceeding : Microsystem technologies'94 Berlin, 19-21 Octobre 1994, pages 209-217,
de Jörg Wengelink, Herbert Engel, Ludwig Möri, Walter Döldissen

### (6)

"Programmable manufacturing technique of long-focal-length microlens arrays"
SPIE OE/LASE 94, 22-29 janvier, Los Angeles,USA
De F. Gex, D. Horville, G. Lelièvre, V. Serpette

### (7)

"Dray Etching, Path to coherent refractive microlens arryas"
SPIE, vol. 1992 Miniature and Micro-Optics and Micromechanics (1993)/283
De Magaret B. Stern, Theresa R. Jay

### (8)

WO 91/11320

### (9)

"Monolithic Q-switched unstable-resonator laser"
Proceeding conference ASSL 98', n°AWD12-1, pages 373 à 375,
de Hua Liu, Shou-Huan Zhou, Y.C. Chen

## Revendications

1. Procédé de formation d'au moins un relief concave (124, 145) dans un substrat, comprenant les étapes suivantes :

   - la formation d'au moins un bossage de matériau fluable (100, 100b) sur le substrat (120, 140), le bossage matériau fluable présentant un facteur de forme défini par le rapport d'une hauteur moyenne h du bossage sur une des dimensions d'une surface s de contact du bossage avec le substrat,
   - le chauffage du matériau fluable à une température suffisante pour provoquer un fluage dudit matériau, et
   - la gravure du substrat et du matériau flué pour imprimer au substrat un relief,

   **caractérisé en ce que** l'on ajuste au moins l'un des paramètres choisis parmi le facteur de forme et la température de chauffage pour conférer, lors du fluage, au bossage un relief concave, et **en ce que** l'on provoque une solidification du matériau flué dans un état où celui-ci présente ledit relief concave.

2. Procédé selon la revendication 1, dans lequel le matériau fluable est une résine photosensible ou un matériau fusible tel qu'un alliage métallique à bas point de fusion.

3. Procédé selon la revendication 2, dans lequel la solidification du matériau flué est obtenue par trempe lorsque le matériau fluable est un matériau fusible, et dans lequel ladite solidification est obtenue par chauffage lorsque le matériau fluable est une résine.

4. Procédé selon la revendication 1, dans lequel on forme un bossage (100) avec un facteur de forme inférieur à une valeur de seuil à partir de laquelle un fluage vers une forme convexe stable serait possible.

5. Procédé selon la revendication 4, dans lequel le bossage avant fluage présente la forme d'un disque de hauteur h et de diamètre D tels que h<0,015.D

6. Procédé selon la revendication 1, dans lequel on forme un bossage (100) en résine avec un facteur de forme supérieur ou égal à une valeur de seuil à partir de laquelle un fluage vers une forme convexe stable est possible et on effectue le chauffage avec une température suffisante pour provoquer une réticulation de la résine avant obtention de la forme convexe stable.

7. Procédé selon la revendication 6, dans lequel on effectue le chauffage à une température supérieure à 120°C.

8. Procédé selon la revendication 1, dans lequel on effectue la gravure avec une sélectivité S sensiblement constante, la sélectivité étant définie comme le rapport d'une vitesse de gravure du substrat sur une vitesse de gravure du matériau flué.

9. Procédé selon la revendication 1, dans lequel on effectue la gravure avec une sélectivité S variant au cours de la gravure, la sélectivité étant définie comme le rapport d'une vitesse de gravure du substrat sur une vitesse de gravure du matériau flué.

10. Procédé selon la revendication 1, dans lequel on interrompt la gravure avant disparition complète du matériau flué, puis on élimine le matériau flué restant.

11. Procédé de fabrication d'un relief plan-concave dans lequel on utilise un substrat en un matériau optique, à faces sensiblement parallèles, et dans lequel on met en oeuvre le procédé de la revendication 1 en formant le bossage sur au moins l'une des faces parallèles.

12. Procédé de fabrication d'une structure comprenant une lentille plan-convexe comprenant les étapes suivantes :

a) formation d'un relief concave dans un substrat (120) conformément à la revendication 1,
b) dépôt conforme sur le substrat d'une couche (140) en un matériau optique épousant la forme du relief,
c) aplanissement d'une face libre de ladite couche de matériau optique pour la rendre sensiblement plane.

13. Procédé selon la revendication 12, comprenant en outre, avant l'étape b), le dépôt d'une couche de matériau sacrificiel sur le substrat, et l'élimination de la couche de matériau sacrificiel postérieurement à l'étape c) pour libérer la couche de matériau optique.

14. Procédé selon la revendication 12, comprenant postérieurement à l'étape c),la formation sur la face libre d'une sur-couche (150).

15. Procédé de fabrication d'une structure comprenant une lentille bi-concave comprenant les étapes suivantes :

a) la formation d'un bossage de matériau fluable (100a) sur un substrat (120),
b) le fluage dudit matériau jusqu'à l'obtention d'un état de fluage stable dans lequel le matériau flué présente une forme convexe,
c) la gravure du substrat et du matériau flué pour imprimer au substrat un relief convexe,
d) le dépôt sur le substrat d'une couche (140) de matériau optique épousant le relief convexe du substrat,
e) l'aplanissement d'une face libre (146) de la couche de matériau optique,
f) la formation d'un relief concave (148) dans la couche de matériau optique (140), conformément à la revendication 1, le relief concave étant formé dans une région de la couche de matériau optique faisant sensiblement face au relief convexe du substrat (120).

16. Procédé selon la revendication 15, comprenant postérieurement à l'étape f) le dépôt sur la couche de matériau optique (140) d'une sur-couche (150), et la planarisation de ladite sur-couche (150).

**17.** Procédé selon la revendication 15, comprenant, avant l'étape d), le dépôt sur le substrat (120) d'une couche de matériau sacrificiel, et après l'étape f), l'élimination de la couche de matériau sacrificiel pour libérer la couche de matériau optique (140).

**18.** Procédé de fabrication d'une structure comprenant une lentille biconvexe, comprenant les étapes suivantes :

a) la formation d'un relief concave dans un substrat (120) selon le procédé de la revendication 1,
b) le dépôt sur le substrat d'une couche (140) de matériau optique épousant ledit relief concave,
c) formation d'un bossage de matériau fluable (100) sur la couche de matériau optique faisant sensiblement face audit relief concave,
d) le fluage du bossage jusqu'à l'obtention d'un état de fluage stable dans lequel le matériau flué présente une forme convexe,
e) la gravure du matériau flué et de la couche optique pour imprimer dans la couche de matériau optique la forme convexe.

**19.** Procédé de fabrication d'une lentille biconvexe selon la revendication 18, comprenant en outre, avant l'étape b), la formation d'une couche de matériau sacrificiel sur le substrat et l'élimination de cette couche après l'étape e), pour libérer la couche de matériau optique.

**20.** Procédé selon la revendication 18, comprenant en outre, après l'étape e), la formation d'une sur-couche recouvrant la couche de matériau optique.

**Patentansprüche**

**1.** Verfahren zur Ausbildung eines konkaven Reliefs (124, 145) in einem Substrat, folgende Schritte umfassend:

- das Ausbilden wenigstens eines Höckers aus einem fließfähigen Material (100, 100b) auf einem Substrat (120, 140), wobei der Höcker aus fließfähigem Material einen Formfaktor aufweist, der definiert wird durch das Verhältnis einer mittleren Höhe h des Höckers zu einer der Abmessungen einer Kontaktfläche s des Höckers mit dem Substrat,
- das Erwärmen des fließfähigen Materials auf eine ausreichende Temperatur, um das Fließen des genannten Materials zu bewirken, und
- das Ätzen des Substrats und des geflossenen Materials, um in dem Substrat ein Relief zu realisieren,

**dadurch gekennzeichnet, dass** man wenigstens einen der Parameter, gewählt zwischen dem Formfaktor und der Erwärmungstemperatur, anpasst, um dem Höcker während des Fließens ein konkaves Relief zu verleihen, und dadurch, dass man eine Verfestigung des geflossenen Materials in einem Zustand verursacht, in dem dieses das genannte konkave Relief aufweist.

**2.** Verfahren nach Anspruch 1, bei dem das fließfähige Material ein Photoresist oder ein schmelzbares Material wie etwa eine Metalllegierung mit niedrigem Schmelzpunkt ist.

**3.** Verfahren nach Anspruch 2, bei dem man die Verfestigung des geflossenen Materials, wenn das fließfähige Material ein schmelzbares Material ist, durch Abschrecken bewirkt, und bei dem man die genannte Verfestigung durch Erwärmung erhält, wenn das fließfähige Material ein Resist ist.

**4.** Verfahren nach Anspruch 1, bei dem man einen Höcker (100) mit einem Formfaktor ausbildet, der niedriger ist als ein Schwellenwert, ab dem ein Fließen zur Ausbildung einer stabilen konvexen Form möglich wäre.

**5.** Verfahren nach Anspruch 4, bei dem der Höcker vor dem Fließen die Form einer Scheibe mit der Höhe h und dem Durchmesser D aufweist, etwa $h<0{,}015.D$.

**6.** Verfahren nach Anspruch 1, bei dem man einen Höcker (100) aus Resist mit einem höheren oder einem gleich hohen Formfaktor wie einem Schwellenwert ausbildet, ab dem ein Fließen möglich ist, bei dem sich eine stabile konvexe Form ausbildet, und man die Erwärmung mit einer ausreichenden Temperatur durchführt, um vor Erlangung der stabilen konvexen Form eine Vernetzung des Resists zu bewirken.

**7.** Verfahren nach Anspruch 6, bei dem man die Erwärmung bei einer Temperatur über 120 °C durchführt.

**8.** Verfahren nach Anspruch 1, bei dem man das Ätzen mit einer im Wesentlichen konstanten Selektivität S durchführt, wobei die Selektivität definiert wird als das Verhältnis einer Ätzgeschwindigkeit des Substrats zu einer Ätzgeschwindigkeit des geflossenen Materials.

**9.** Verfahren nach Anspruch 1, bei dem man das Ätzen mit einer Selektivität S durchführt, die im Laufe des Ätzens variiert, wobei die Selektivität definiert wird als das Verhältnis einer Ätzgeschwindigkeit des Substrats zu einer Ätzgeschwindigkeit des geflossenen Materials.

**10.** Verfahren nach Anspruch 1, bei dem man das Ätzen vor dem vollständigen Verschwinden des zerflossenen Materials unterbricht und dann das restliche zerflossene Material eliminiert.

**11.** Verfahren zur Herstellung eines plan-konkaven Reliefs, bei dem man ein Substrat aus einem optischen Material verwendet, dessen Seiten im Wesentlichen parallel sind, und bei dem man das Verfahren des Anspruchs 1 anwendet, indem man den Höcker auf wenigstens einer der parallelen Seiten ausbildet.

**12.** Verfahren zur Herstellung einer Struktur mit einer plan-konvexen Linse, folgende Schritte umfassend:

a) Ausbildung eines konkaven Reliefs in einem Substrat (120) gemäß Anspruch 1,
b) konforme Abscheidung einer Schicht (140) aus einem die Form des Reliefs annehmenden optischen Materials auf dem Substrat,
c) Planierung einer freien Fläche der genannten Schicht aus optischem Material, um sie planer zu machen.

**13.** Verfahren nach Anspruch 12, außerdem vor dem Schritt b) die Abscheidung einer Opfermaterialschicht auf dem Substrat umfassend sowie die spätere Eliminierung der Opfermaterialschicht in Schritt c), um die Schicht aus optischem Material freizulegen.

**14.** Verfahren nach Anspruch 12, nach Schritt c) die Ausbildung einer Deckschicht (150) auf der freien Fläche umfassend.

**15.** Verfahren zu Herstellung einer Struktur mit einer bikonkaven Linse, folgende Schritte umfassend:

a) Bilden eines Höckers aus fließfähigem Material (100a) auf einem Substrat (120),
b) das genannte Material fließen lassen bis zur Erlangung eines stabilen Fließzustands, in dem das geflossene Material eine konvexe Form aufweist,
c) Ätzen des Substrats und des geflossenen Materials, um in dem Substrat ein konvexes Relief zu realisieren,
d) Abscheiden einer Schicht (140) aus optischem Material auf dem Substrat, die sich an das konvexe Relief des Substrats anpasst,
e) Planieren einer freien Fläche (146) der Schicht aus optischem Material,
f) Ausbilden eines konkaven Reliefs (148) in der Schicht aus optischem Material (140), gemäß Anspruch 1, wobei das konkave Relief in einem Bereich der Schicht aus optischem Material ausgebildet wird, die im Wesentlichen dem konvexen Relief des Substrats (120) gegenübersteht.

**16.** Verfahren nach Anspruch 15, nach dem Schritt f) die Abscheidung einer Deckschicht (150) auf der Schicht aus optischem Material (140) sowie die Planarisierung der genannten Deckschicht (150) umfassend.

**17.** Verfahren nach Anspruch 15, vor dem Schritt d) die Abscheidung einer Opfermaterialschicht auf dem Substrat (120) umfassend und nach dem Schritt f) die Eliminierung der Opfermaterialschicht, um die Schicht aus optischem Material (140) freizulegen.

**18.** Verfahren zur Herstellung einer Struktur, die folgenden Schritte umfassend:

a) Ausbilden eines konkaven Reliefs in einem Substrat (120) gemäß dem Verfahren des Anspruchs 1,
b) Abscheiden einer Schicht (140) aus optischem Material auf dem Substrat, die sich an das genannte konkave Relief anpasst,
c) Bilden eines Höckers aus fließfähigem Material (100) auf der Schicht aus optischem Material, der dem genannten konkaven Relief im Wesentlichen gegenübersteht,
d) Höcker fließen lassen bis zu Erlangung eines stabilen Fließzustands, in dem das geflossene Material eine konvexe Form aufweist,
e) Ätzen des geflossenen Materials und der optischen Schicht, um in der Schicht aus optischem Material die konvexe Form zu realisieren.

**19.** Verfahren zur Herstellung einer bikonvexen Linse nach Anspruch 18, das außerdem - vor dem Schritt b) - die Bildung einer Opfermaterialschicht auf dem Substrat und die Eliminierung dieser Schicht nach dem Schritt e) umfasst, um die Schicht aus optischem Material freizulegen.

**20.** Verfahren nach Anspruch 18, das außerdem - nach Schritt e) - die Bildung einer Deckschicht umfasst, welche die Schicht aus optischem Material bedeckt.

**Claims**

**1.** Process for the formation of at least a concave relief (124, 145) in a substrate comprising the following steps:

- the formation of at least one embossment (100, 100b) on the substrate (120, 140), made of a material subject to creep, the embossment of material subject to creep having a shape factor defined by the ratio of the average height h of the embossment to one of the dimensions of a contact area s between the embossment and the substrate,

- heating of the material subject to creep to a sufficiently high temperature to cause creep of the said material, and

- etching of the substrate and the crept material to form a relief on the substrate,

**characterized in that** at least one of the parameters selected among the shape factor and the heating temperature is adjusted to apply a concave relief to the embossment and the crept material is solidified in a state in which it has the said concave relief.

2. Process according to claim 1, in which the material subject to creep is a photosensitive resin or a meltable material such as a metal alloy with a low melting point.

3. Process according to claim 2, in which the crept material is solidified by quenching when the material subject to creep is a meltable material, and in which the said solidification is achieved by heating when the material subject to creep is a resin.

4. Process according to claim 1, in which an embossment (100) is formed with a shape factor below a threshold value starting from which creep towards a stable convex shape will be possible.

5. Process according to claim 4, in which the embossment is in the shape of a disk with height h and diameter D before creep such that h < 0.015.D.

6. Process according to claim 1, in which an embossment (100) is formed made of resin with a shape factor greater than or equal to a threshold value starting from which creep towards a stable convex shape is possible, and the heating temperature is increased sufficiently to cause cross-linking of the resin before the stable convex shape is achieved.

7. Process according to claim 6, in which heating is applied to increase the temperature to more than 120°C.

8. Process according to claim 1, in which etching is done with an approximately constant selectivity S, the selectivity being defined as being the ratio of the rate of etching the substrate to the rate of etching the crept material.

9. Process according to claim 1, in which the etching is done with a varying selectivity S during etching, the selectivity being defined as the ratio of the rate of etching the substrate to the rate of etching the crept material.

10. Process according to claim 1, in which etching is interrupted before the crept material has completely disappeared, and the remaining crept material is then eliminated.

11. Process for making a plane-concave relief in which a substrate made of an optical material with approximately parallel faces is used, and in which the process according to claim 1 is used forming the embossment on at least one of the parallel faces.

12. Process for the production of a structure comprising a plane-convex type lens, including the following steps:

a) formation of a concave relief in a substrate (120) in accordance with claim 1;
b) conform deposition on the substrate of a layer (140) of optical material matching the shape of the relief;
c) flattening of an exposed face of the said layer of optical material to make it approximately plane.

13. Process according to claim 12, also comprising the deposition of a sacrificial material on the substrate before step b), and elimination of the layer of sacrificial material after step c), to expose the layer of optical material.

14. Process according to claim 12, including the formation of an overlayer (150) on the free surface after step c).

15. Process for the production of a concave-concave lens including the following steps:

a) formation of an embossment (100a) of material subject to creep on a substrate (120);
b) creep of the said material until a stable creep state is reached in which the crept material has a convex shape;
c) etching of the substrate and the crept material to apply a convex relief to the substrate;
d) deposition of a layer of optical material on the substrate matching the convex relief of the substrate;
e) flattening of an exposed surface (146) of the layer of optical material;
f) formation of concave relief (148) in the layer of optical material (140) in accordance with claim 1, the concave relief being formed in a region of the layer of optical material corresponding to the convex relief of the substrate (120).

16. Process according to claim 15, comprising deposition of an overlayer (150) on the optical material layer (140) after step f), and planarization of the said overlayer (150).

17. Process according to claim 15, comprising the deposition of a layer of sacrificial material before step d), and elimination of the layer of sacrificial material after step f) to expose the layer of optical material (140).

18. Process for the production of a structure comprising a convex-convex lens, comprising the following steps:

a) formation of a concave relief in a substrate (120) using the process according to claim 1;
b) deposition of a layer (140) of optical material matching the said concave relief, on the substrate;
c) formation of an embossment of material subject to creep (100) on the layer of optical material, approximately facing the said concave relief;
d) creep of the embossment until a stable creep state is reached in which the shape of the crept material is convex;
e) etching of the crept material and the layer of optical material to apply the convex shape in the layer of optical material.

19. Process for the production of a convex-convex lens according to claim 18, also comprising the formation of a layer of sacrificial material on the substrate before step b), and the elimination of this layer after step e), to expose the layer of optical material.

20. Process according to claim 18, also comprising the formation of an overlayer after step e) covering the layer of optical material.

FIG. 1

FIG. 2

FIG. 3

FIG. 4

100

120

FIG. 5

104

100

120

FIG. 6

120

124

FIG. 7

100

124

120

FIG. 8

125

124

120

FIG. 9

16

120

**FIG. 10**

140

130

120

**FIG. 11**

1

146

140

142

144

**FIG. 12**

140

120

FIG. 13

150

146

140

120

FIG. 14

FIG. 15

FIG. 16

FIG. 17

146

140

130

120

FIG. 18

104

100b

140

130

145

120

FIG. 19

140

130

120

FIG. 20

146    148

140

144

FIG. 21

150

140

120

FIG. 22

150

140

120

FIG. 23

120

FIG. 24

144    146

140

130

120

FIG. 25

100    114    148

146

140

130

120

FIG. 26

FIG. 27

FIG. 28

FIG. 29

FIG. 30

150

140

120

FIG. 31

150

120

140

FIG. 32

120

FIG. 33

120

FIG. 34